(19) Europäisches Patentamt / European Patent Office / Office européen des brevets

(11) **EP 2 377 717 B1**

(12) **FASCICULE DE BREVET EUROPEEN**

(45) Date de publication et mention
de la délivrance du brevet:
**17.12.2014 Bulletin 2014/51**

(51) Int Cl.:
***B60M 3/06*** *(2006.01)*

(21) Numéro de dépôt: **11305439.9**

(22) Date de dépôt: **14.04.2011**

(54) **Procédé de détection de défauts sur une ligne d'alimentation de véhicules ferroviaires**

Verfahren zur Fehlererkennung in einer Stromversorgungsleitung von Schienenfahrzeugen

Method for detecting faults on a railway vehicle feeder cable

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.04.2010 FR 1052962**

(43) Date de publication de la demande:
**19.10.2011 Bulletin 2011/42**

(73) Titulaire: **ALSTOM Transport Technologies
92300 Levallois-Perret (FR)**

(72) Inventeur: **Bellegarde, Nicolas
94210, LA VARENNE SAINT-HILAIRE (FR)**

(74) Mandataire: **Blot, Philippe Robert Emile
Cabinet Lavoix
2, place d'Estienne d'Orves
75441 Paris Cedex 09 (FR)**

(56) Documents cités:
**DD-A1- 141 141      DE-A1- 10 337 937
DE-B1- 2 902 458**

**Description**

La présente invention concerne un procédé de détection de défauts d'une ligne d'alimentation électrique de véhicules ferroviaires, ladite ligne s'étendant entre au moins une première et une deuxième sous-stations réversibles aptes à fournir un courant électrique circulant sur la ligne d'alimentation électrique, la première sous-station étant commandée dans un mode de fourniture de courant, pour fournir du courant électrique à la ligne d'alimentation électrique et la deuxième sous-station étant commandée dans un mode de récupération de courant, pour récupérer le courant électrique de la ligne d'alimentation et le renvoyer sur un réseau de distribution électrique. Une telle ligne d'alimentation est connu de DE 10337937 A.

Pour leur alimentation en courant électrique, les véhicules ferroviaires comportent un pantographe, qui frotte sur une ligne d'alimentation électrique sur laquelle circule un courant provenant du réseau électrique. Ce frottement répété engendre, au cours de la vie de la ligne d'alimentation électrique, une usure mécanique de cette ligne, conduisant à une réduction de sa section.

Les lignes d'alimentation électrique peuvent également s'user par exemple sous l'effet des conditions climatiques.

Cette usure est susceptible, à plus ou moins long terme, de conduire à une rupture de la ligne d'alimentation électrique, si ces défauts ne sont pas détectés et réparés en temps utile ou à des dysfonctionnements dans l'alimentation électrique des véhicules ferroviaires.

Dans des circonstances exceptionnelles, telles que, par exemple, lors de chutes de neige importantes ou de tempêtes, il arrive également que la ligne d'alimentation se rompe brutalement.

Or, une telle rupture de ligne d'alimentation donne lieu à des perturbations importantes du trafic ferroviaire si elle n'est pas détectée à temps, puisque les véhicules ferroviaires ne peuvent alors plus circuler sur la ligne et que les véhicules ferroviaires déjà engagés sur la ligne restent bloqués et doivent être remorqués par des engins spéciaux.

Il est possible, pour détecter des défauts sur une ligne d'alimentation électrique, de mesurer la tension mécanique de la ligne d'alimentation électrique en ajoutant à ses extrémités des moyens mécaniques, aptes à mesurer la tension mécanique de la ligne d'alimentation. Une chute de tension importante indique alors une rupture de caténaire.

Un tel procédé ne donne pas entière satisfaction. En effet, il nécessite l'ajout de matériel supplémentaire, spécifique à la détection d'une rupture éventuelle de la ligne d'alimentation et qui n'est pas utile en temps normal. En outre, il permet uniquement de détecter une rupture de la ligne et ne donne pas d'indications quant à l'usure de la ligne, susceptible de conduire à plus ou moins long terme à une rupture.

Un but de l'invention est donc d'obtenir un procédé de détection de défauts de lignes d'alimentation électrique qui soit simple et peu coûteux à mettre en oeuvre et qui permette de détecter l'usure de lignes d'alimentation avant une éventuelle rupture de celles-ci.

A cet effet, l'invention a pour objet un procédé de détection de défauts du type précité, caractérisé en ce qu' il comprend une étape d'établissement d'une différence de tension entre les bornes de sortie des première et deuxième sous-stations de sorte qu'un courant circule sur la ligne d'alimentation électrique entre la première sous-station et la deuxième sous-station ;

une étape de détermination de la valeur de l'impédance de la ligne d'alimentation à une température nominale ; et
une étape de comparaison de la valeur de l'impédance déterminée de la ligne d'alimentation à la température nominale avec une impédance nominale attendue de la ligne d'alimentation à la température nominale.

Ce procédé peut être mis en oeuvre sans équipement spécifique et piloté à distance, ce qui limite les coûts et facilite la maintenance de la ligne.

Le procédé selon l'invention peut comprendre l'une ou plusieurs des caractéristiques suivantes, prise(s) isolément ou suivant toute(s) combinaison(s) techniquement possible(s) :

- le procédé comprend une étape de mesure du courant circulant sur la ligne d'alimentation, la valeur de l'impédance déterminée de la ligne d'alimentation à la température nominale étant déterminée en fonction du courant mesuré ;
- le procédé comprend une étape de mesure de la température de la ligne d'alimentation, la valeur de l'impédance déterminée de la ligne d'alimentation à la température nominale étant déterminée en fonction de la température mesurée ;
- le procédé comprend une étape de choix et de commande de la différence de tension entre les bornes de sortie des première et deuxième sous-stations ;
- la première sous-station et la deuxième sous-station comprennent chacune un convertisseur de puissance réversible, de sorte que la première sous-station et la deuxième sous-station peuvent fonctionner en mode de fourniture de courant ou en mode de récupération de courant et le procédé comprend une étape de commande du mode de fonctionnement de la première et de la deuxième sous-station, respectivement en mode fourniture de courant et en mode de récupération de courant.

- le convertisseur de puissance réversible comprend un redresseur et un onduleur, relié au redresseur en anti-parallèle, et la première ou la deuxième sous-station fonctionne en mode onduleur lorsqu'elle est commandée en mode de récupération de courant et en mode redresseur lorsqu'elle est commandée en mode de fourniture de courant ;
- chaque sous-station est connectée à la ligne d'alimentation et à un rail de sorte que le courant circule en boucle en passant successivement par la sous-station commandée en mode de fourniture de courant, puis par la ligne d'alimentation, puis par la sous-station commandée en mode de récupération de courant, puis par le rail pour revenir à la sous-station commandée en mode de fourniture de courant ;
- le procédé comprend une étape de vérification de la circulation d'un véhicule ferroviaire entre la première et la deuxième sous-stations, la différence de tension étant établie si aucun véhicule ne circule entre la première et la deuxième sous-stations ;
- la ligne d'alimentation s'étendant entre plus de deux sous-stations, le procédé comprend une étape de choix de deux sous-stations à commander respectivement en mode de fourniture de courant et en mode de récupération de courant et une étape d'établissement d'une différence de tension entre les bornes de sortie desdites sous-stations en fonction de la partie de la ligne à tester ; et
- le procédé comprend une étape d'émission d'une alarme si le rapport :

$$\frac{Z_{det}}{Z_L}$$

est inférieur à une valeur seuil.

L'invention sera mieux comprise à la lecture de la description qui va suivre, donnée uniquement à titre d'exemple, et faite en se référant aux dessins annexés, sur lesquels :

- la figure 1 est une illustration schématique d'un réseau ferroviaire équipé de sous-stations, apte à mettre en oeuvre le procédé de détection de défauts selon l'invention ; et
- la figure 2 est une illustration schématique de la mise en oeuvre du procédé selon l'invention par le réseau ferroviaire de la figure 1.

L'invention s'applique à une ligne d'alimentation de véhicules ferroviaires à courant continu ou à courant alternatif. Dans la suite de la description, le mode de réalisation décrit concerne une ligne d'alimentation à courant continu.

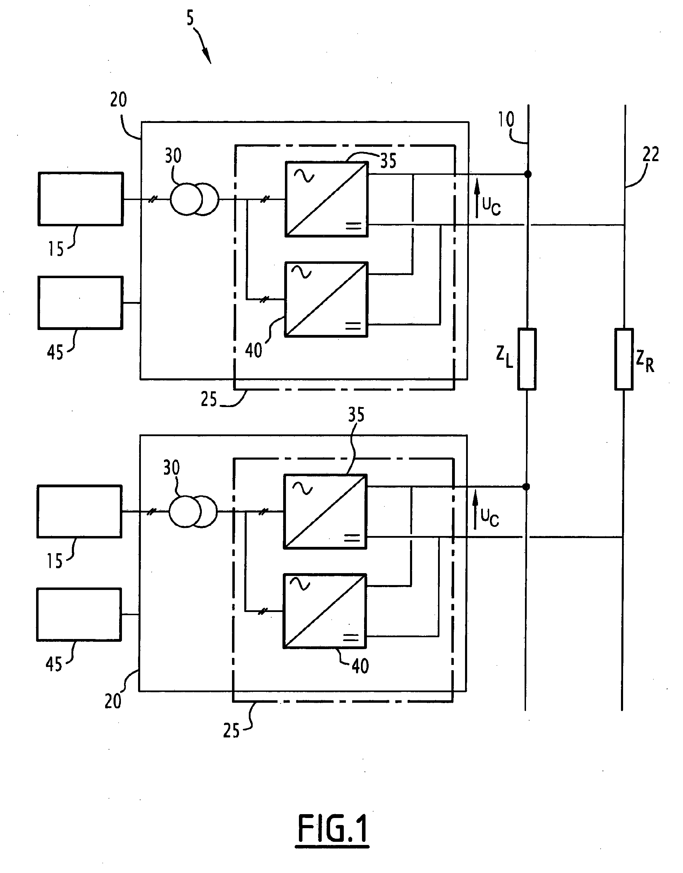

Le réseau ferroviaire à courant continu 5 représenté sur la figure 1 comporte une ligne d'alimentation électrique 10, reliée à un réseau d'alimentation électrique 15 par l'intermédiaire de sous-stations réversibles 20.

Par sous-station réversible, on entend une sous-station apte, dans un mode de fourniture de courant, à fournir du courant à la ligne d'alimentation électrique 10 et également apte, dans un mode de récupération de courant, à récupérer du courant de la ligne d'alimentation électrique 10, le courant récupéré étant par exemple issu du freinage d'un véhicule ferroviaire connecté à la ligne d'alimentation 10, et à le renvoyer sur le réseau d'alimentation électrique 15.

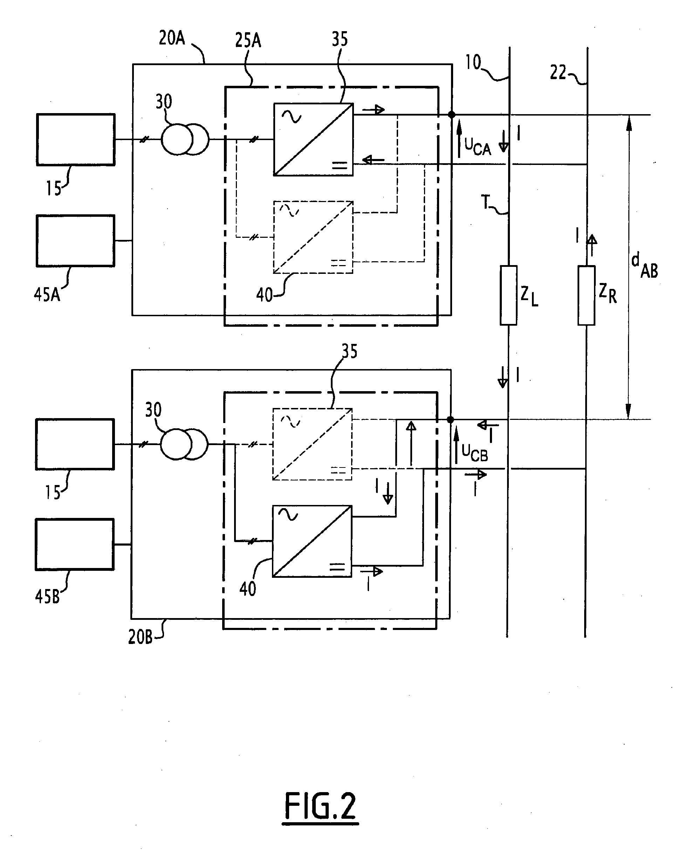

Le réseau ferroviaire 5 comporte un nombre n de sous-stations 20, réparties à intervalles réguliers le long de la ligne d'alimentation électrique 10. Pour simplifier les figures 1 et 2 seules deux sous-stations 20 ont été représentées. Les sous-stations 20 sont aptes à faire circuler un courant I sur la ligne d'alimentation 10.

Le réseau ferroviaire 5 comporte en outre un ou plusieurs capteurs de température (non représentés), adaptés pour mesurer la température $T_{mes}$ de la ligne d'alimentation électrique 10, ainsi que des capteurs adaptés pour mesurer l'intensité $I_{mes}$ du courant circulant sur la ligne d'alimentation 10 (non représentés). De tels capteurs de température et d'intensité sont par exemple disposés au niveau de chaque sous-station 20.

Le réseau ferroviaire 5 comprend également des rails 22, sur lesquels un véhicule ferroviaire est apte à circuler. Les rails 22 présentent une impédance linéique nominale $Z_R$, par exemple égale à 18 mΩ/km pour une voie standard à deux rails en parallèle. Les rails 22 sont reliés électriquement aux sous-stations 20.

La ligne d'alimentation électrique 10 présente une impédance linéique nominale $Z_L$ calculée à une température nominale. L'impédance linéique nominale $Z_L$ est par exemple de 0,05 Ω/km pour les lignes de contact aériennes et 0,02 Ω/km pour les lignes de contact au sol type 3$^{ème}$ rail en courant continu. Ces valeurs diffèrent pour une ligne d'alimentation à courant alternatif. La valeur de l'impédance linéique nominale $Z_L$ de la ligne d'alimentation électrique 10 est indiquée par les spécifications de la ligne d'alimentation 10.

Le réseau d'alimentation électrique 15 est un réseau grande distance de distribution d'électricité. Il s'agit par exemple d'un réseau de tension alternative triphasée haute tension.

Les sous-stations 20 sont identiques les unes aux autres et seule l'une de ces sous-stations 20 sera décrite en détail.

La sous-station 20 comporte un convertisseur réversible 25 quatre quadrants raccordé d'un côté au réseau d'alimentation électrique 15 et de l'autre côté à la ligne d'alimentation 10.

Un transformateur de traction 30 est disposé entre le convertisseur 25 et le réseau d'alimentation 15, de manière à abaisser la tension alternative issue du réseau d'alimentation 15 jusqu'à une tension alternative acceptée à l'entrée du convertisseur 25.

Le convertisseur 25 est un convertisseur réversible qui peut être, à titre d'exemple, composé d'un redresseur 35, relié en anti-parallèle à un onduleur 40. Le convertisseur 25 est apte à fonctionner en mode redresseur ou en mode onduleur.

En mode redresseur, le convertisseur 25 est apte à redresser la tension alternative triphasée provenant du transformateur de traction 30 pour délivrer à sa sortie une tension continue redressée. Le convertisseur 25 est ainsi en mode de fourniture de courant.

En mode onduleur, le convertisseur 25 est apte à onduler la tension continue provenant de la ligne d'alimentation 10 pour délivrer une tension triphasée alternative. Le convertisseur 25 est ainsi en mode de récupération de courant.

Le convertisseur 25 est un convertisseur commandable. A cet effet, la sous-station 20 comporte un module de commande 45 apte à commander le basculement du convertisseur 25 du mode de récupération de courant vers le mode de fourniture de courant, c'est-à-dire du mode onduleur vers le mode redresseur et vice versa.

Le redresseur 35 est par exemple formé d'un pont redresseur commandé réalisé à partir de thyristors ou de transistors de puissance tels que des transistors IGBT (Insulated Gate Bipolar Transistor).

Le convertisseur 25 est apte à générer à sa borne de sortie, c'est-à-dire au point de connexion électrique de la sous-station 20 à la ligne d'alimentation 10, une tension $U_c$ désirée.

Une telle sous-station 20 est par exemple décrite dans le document EP-1 985 490.

Selon un mode de réalisation, le réseau ferroviaire 5 comporte en outre, au niveau de chaque sous-station 20, un capteur adapté pour mesurer la tension $U_c$ effectivement appliquée à la sortie de chaque sous-station 20 de manière à vérifier que cette tension correspond à la tension $U_c$ de commande.

Le procédé de détection de défauts de la ligne d'alimentation 10 selon l'invention va maintenant être expliqué en référence à la figure 2.

Dans une première étape, l'opérateur choisit un tronçon T de la ligne d'alimentation 10 sur lequel il souhaite détecter l'existence de défauts.

Il détermine ensuite, dans une deuxième étape, la première sous-station 20A et la deuxième sous-station 20B entre lesquelles s'étend le tronçon T de la ligne d'alimentation 10 sélectionné dans la première étape. La première sous-station 20A et la deuxième sous-station 20B sont distantes d'une distance $d_{AB}$. La première sous-station 20A et la deuxième sous-station 20B sont par exemple des sous-stations adjacentes le long de la ligne d'alimentation 10. Il peut cependant également s'agir de sous-stations qui ne sont pas adjacentes et sont séparées entre elles par un nombre de sous-stations inférieur ou égal à n-2. Ainsi, la première sous-station 20A et la deuxième sous-station 20B peuvent par exemple être les sous-stations d'extrémité de la ligne d'alimentation électrique 10.

L'opérateur s'assure alors qu'aucun véhicule ferroviaire ne circule sur le tronçon T entre la première sous-station 20A et la deuxième sous-station 20B ou est sur le point d'arriver à la première ou à la deuxième sous-station 20A, 20B.

Dans une troisième étape, l'opérateur choisit un courant I de détection de défauts qu'il souhaite faire circuler sur le tronçon T de la ligne d'alimentation 10. Ce courant I est inférieur à une valeur limite $I_{max}$ au-dessus de laquelle la ligne d'alimentation 10 et/ou les équipements associés pourraient être endommagés.

Il déduit ensuite de la valeur du courant I choisie, des valeurs des tensions de sortie $U_{CA}$ et $U_{CB}$ désirées respectivement à la sortie d'un premier convertisseur 25A de la première sous-station 20A et d'un deuxième convertisseur 25B de la deuxième sous-station 20B. Les tensions de sortie $U_{CA}$ et $U_{CB}$ sont différentes l'une de l'autre. La tension $U_{CA}$ est supérieure à la tension $U_{CB}$.

Dans une quatrième étape, l'opérateur commande, par l'intermédiaire d'un module de commande 45A de la première sous-station 20A, le fonctionnement du convertisseur 25A en mode de fourniture de courant, c'est-à-dire en mode redresseur. Simultanément, il commande, par l'intermédiaire d'un module de commande 45B de la deuxième sous-station 20B, le fonctionnement du convertisseur 25B en mode de récupération de courant, c'est-à-dire en mode onduleur.

Il s'établit ainsi une différence de tension D entre les sorties de la première sous-station 20A et de la deuxième sous-station 20B. Cette différence de tension D est égale à $U_{CA}-U_{CB}$. Cette différence de tension D est positive. Elle engendre la circulation d'un courant I de détection de défauts sur la ligne d'alimentation 10 sur le tronçon T entre la première sous-station 20A et la deuxième sous-station 20B.

Du fait de la connexion électrique entre les première et deuxième sous-stations 20A, 20B et les rails 22, le courant I décrit une boucle passant par la ligne d'alimentation 10 de la première sous-station 20A vers la deuxième sous-station 20B, c'est-à-dire sur le tronçon T et par le rail 22 de la deuxième sous-station 20B vers la première sous-station 20A.

Dans une cinquième étape, l'opérateur commande la mesure, par le capteur de courant, de la valeur $I_{mes}$ du courant électrique circulant sur le tronçon T, ainsi que la mesure, par le capteur de température, de la température $T_{mes}$ de la ligne d'alimentation 10.

Selon un mode de réalisation, ces mesures sont faites à une seule localisation sur le tronçon T. Selon un autre mode de réalisation, elles sont effectuées au niveau des première et deuxième sous-stations 20A, 20B.

Selon un mode de réalisation, l'opérateur commande également la mesure, par le capteur de tension, des tensions $U_{CA}$ et $U_{CB}$ effectivement appliquées respectivement à la sortie des sous-stations 20A et 20B et compare ces valeurs aux valeurs de commande.

Dans une sixième étape, l'opérateur détermine une valeur $Z_{det}$ de l'impédance linéique de la ligne d'alimentation 10 à une température nominale.

A cet effet, il détermine l'impédance $Z(T_{mes})$ de la ligne d'alimentation 10 à la température $T_{mes}$ de la ligne 10, mesurée à l'aide du capteur de température, à l'aide de la formule suivante :

$$Z(T_{mes}) = \frac{(U_{CA} - U_{CB}) - Z_R(T_{mes}) \times I_{mes} \times d_{AB}}{I_{mes} \times d_{AB}} = \frac{D - Z_R(T_{mes}) \times I_{mes} \times d_{AB}}{I_{mes} \times d_{AB}}$$

Dans cette formule, $Z_R(T_{mes})$ est la valeur de l'impédance linéique du rail 22 à la température $T_{mes}$.

Dans cette formule, $U_{CA}$ et $U_{CB}$ peuvent être les valeurs de commande ou, pour une estimation plus fine, les valeurs effectivement appliquées mesurées par le capteur de tension.

L'opérateur déduit ensuite de la valeur $Z(T_{mes})$ de l'impédance de la ligne 10 ainsi déterminée et de la température $T_{mes}$ de la ligne d'alimentation 10, la valeur $Z_{det}$ de l'impédance de la ligne d'alimentation 10 à la température nominale, à laquelle la valeur nominale $Z_L$ de l'impédance de la ligne d'alimentation 10 indiquée dans les spécifications a été calculée. Cette déduction est par exemple effectuée grâce à une table de conversion.

Enfin, il compare la valeur $Z_{det}$ de l'impédance de la ligne 10 déterminée à la sixième étape à la valeur nominale $Z_L$ de l'impédance linéique attendue à la température nominale et déduit de cette comparaison une valeur C caractéristique des défauts dans la ligne d'alimentation 10.

Ainsi, la valeur C correspond par exemple au quotient de $Z_{det}$ par $Z_L$ selon la formule

$$C = \frac{Z_{det}}{Z_L}$$

Cette valeur C correspond à la réduction de la section de la ligne d'alimentation 10 par rapport à sa section nominale.

Dans une septième étape, selon un mode de réalisation, l'opérateur compare cette valeur C à une valeur seuil $C_S$. La valeur $C_S$ correspond à la réduction de section de la ligne d'alimentation 10 maximale admissible, c'est-à-dire pour laquelle il est encore possible de faire passer sur la ligne 10 des véhicules ferroviaires en toute sécurité.

Si la valeur C est inférieure à la valeur seuil $C_S$, l'opérateur déclenche une alarme, qui indique qu'un défaut a été constaté sur la ligne d'alimentation 10.

Des mesures réparatoires sont alors prises, par exemple pour consolider la ligne 10 à l'endroit où elle est usée et prévenir ainsi une rupture de la ligne 10 due à l'usure.

Dans le cas où la ligne d'alimentation 10 est rompue, aucun courant I ne circule sur la ligne 10 et $Z_{det}$ tend vers l'infini. Dans ce cas, dans un mode de réalisation, l'opérateur commande l'arrêt de la circulation des véhicules ferroviaires le long de la ligne d'alimentation 10.

Ce procédé est mis en oeuvre à distance par un opérateur, qui commande chacune des étapes du procédé.

Selon un autre mode de réalisation, ce procédé peut également être mis en oeuvre de manière automatisée. Dans ce cas, le réseau ferroviaire comprend en variante un module de commande apte à commander chacune des étapes du procédé énumérées ci-dessus, de manière à détecter des défauts de la ligne d'alimentation.

Le procédé de détection de défauts selon l'invention présente l'avantage de ne pas nécessiter la fourniture d'équipements additionnels spécifiques en vue de la détection de défauts au niveau de la ligne d'alimentation. En effet, le procédé fait uniquement appel aux sous-stations réversibles, qui sont présentes en permanence le long de la ligne d'alimentation, puisqu'elles servent à l'alimentation de la ligne d'alimentation.

Le procédé selon l'invention est en outre particulièrement simple à mettre en oeuvre, puisqu'il suffit de sélectionner des tensions de sortie adaptées des convertisseurs de certaines sous-stations pour détecter d'éventuels défauts de la ligne d'alimentation entre ces sous-stations.

En outre, ce procédé présente une sécurité d'utilisation importante, puisqu'il peut être mis en oeuvre à distance sans nécessiter de personnel d'entretien au niveau du tronçon lui-même.

Enfin, ce procédé permet de détecter non seulement une rupture de la ligne d'alimentation, mais également une usure de la ligne d'alimentation ayant pour effet une réduction localisée ou répartie de sa section. Ainsi, des mesures préventives de réparation ou de consolidation de la ligne peuvent être prises et le risque de rupture de la ligne est diminué.

Il est possible de mettre en oeuvre ce procédé dans un premier temps sur un tronçon T long, puis, si des défauts sont détectés, de mettre en oeuvre le procédé sur différents sous-tronçons T' moins longs inclus dans le tronçon T initial de manière à déterminer de manière plus précise la localisation géographique du défaut.

Selon une variante du convertisseur 25, celui-ci est un convertisseur deux quadrants.

Selon un autre mode de réalisation, la ligne d'alimentation 10 est une ligne d'alimentation à courant alternatif. Dans ce mode de réalisation, le convertisseur de puissance réversible 25 de la sous-station 20, agencé entre le transformateur 30 et la ligne d'alimentation 10, est un convertisseur alternatif-alternatif réversible.

La sous-station 20 comporte également un module de commande 45 apte à commander le basculement du convertisseur alternatif-alternatif réversible 25 en mode de fourniture de courant électrique ou en mode de récupération de courant électrique.

Comme cela a été décrit ci-dessus, pour une ligne d'alimentation 10 s'étendant entre une première et une deuxième sous-stations réversibles 20A, 20B, la première sous-station 20A est commandée en mode de fourniture de courant électrique, tandis que la deuxième sous-station 20B est commandée en mode de récupération de courant électrique.

Il est ensuite établi une différence de tension D entre les bornes de sortie des première et deuxième sous-stations 20A, 20B de sorte qu'un courant I circule sur la ligne d'alimentation électrique 10 entre la première sous-station 20A et la deuxième sous-station 20B. La valeur de l'impédance $Z_{det}$ de la ligne d'alimentation 10 à une température nominale est ensuite déterminée de la même manière que dans le premier mode de réalisation et cette valeur $Z_{det}$ est comparée à l'impédance nominale $Z_L$ de la ligne d'alimentation 10 attendue à la température nominale.

**Revendications**

1. Procédé de détection de défauts d'une ligne d'alimentation électrique (10) de véhicules ferroviaires, ladite ligne (10) s'étendant entre au moins une première et une deuxième sous-stations réversibles (20A , 20B) aptes à fournir un courant électrique (I) circulant sur la ligne d'alimentation électrique (10), la première sous-station (20A) étant commandée dans un mode de fourniture de courant, pour fournir du courant électrique à la ligne d'alimentation électrique (10) et la deuxième sous-station (20B) étant commandée dans un mode de récupération de courant, pour récupérer le courant électrique de la ligne d'alimentation (10) et le renvoyer sur un réseau de distribution électrique (15), ledit procédé étant **caractérisé en ce qu'**il comprend successivement :

   une étape d'établissement d'une différence de tension (D) entre les bornes de sortie des première et deuxième sous-stations (20A, 20B) de sorte qu'un courant (I) circule sur la ligne d'alimentation électrique (10) entre la première sous-station (20A) et la deuxième sous-station (20B);
   une étape de détermination de la valeur de l'impédance ($Z_{det}$) de la ligne d'alimentation (10) à une température nominale ; et
   une étape de comparaison de la valeur ($Z_{det}$) de l'impédance déterminée de la ligne d'alimentation (10) à la température nominale avec une impédance nominale ($Z_L$) attendue de la ligne d'alimentation (10) à la température nominale.

2. Procédé de détection de défauts selon la revendication 1, **caractérisé en ce qu'**il comprend une étape de mesure du courant ($I_{mes}$) circulant sur la ligne d'alimentation (10), la valeur de l'impédance ($Z_{det}$) déterminée de la ligne d'alimentation (10) à la température nominale étant déterminée en fonction du courant ($I_{mes}$) mesuré.

3. Procédé de détection de défauts selon la revendication 1 ou 2, **caractérisée en ce qu'**elle comporte une étape de mesure de la température ($T_{mes}$) de la ligne d'alimentation (10), la valeur de l'impédance ($Z_{det}$) déterminée de la ligne d'alimentation (10) à la température nominale étant déterminée en fonction de la température ($T_{mes)}$ mesurée.

4. Procédé de détection de défauts selon l'une des revendications 1 à 3, **caractérisée en ce qu'**il comporte une étape de choix et de commande de la différence de tension (D) entre les bornes de sortie des première et deuxième sous-stations (20A, 20B).

5. Procédé de détection de défauts selon la revendication 1 à 4, **caractérisé en ce que** la première sous-station (20A)

et la deuxième sous-station (20B) comprennent chacune un convertisseur de puissance réversible (25), de sorte que la première sous-station (20A) et la deuxième sous-station (20B) peuvent fonctionner en mode de fourniture de courant ou en mode de récupération de courant et **en ce que** le procédé comprend une étape de commande du mode de fonctionnement de la première et de la deuxième sous-station (20A, 20B), respectivement en mode fourniture de courant et en mode de récupération de courant.

6. Procédé de détection de défauts selon la revendication 5, **caractérisé en ce que** le convertisseur de puissance réversible (25) comprend un redresseur (35) et un onduleur (40), relié au redresseur (35) en anti-parallèle, et **en ce que** la première ou la deuxième sous-station (20A, 20B) fonctionne en mode onduleur lorsqu'elle est commandée en mode de récupération de courant et en mode redresseur lorsqu'elle est commandée en mode de fourniture de courant.

7. Procédé de détection de défauts selon l'une quelconque des revendications 1 à 6, **caractérisé en ce que** chaque sous-station (20A, 20B) est connectée à la ligne d'alimentation (10) et à un rail (22) de sorte que le courant (I) circule en boucle en passant successivement par la sous-station (20A) commandée en mode de fourniture de courant, puis par la ligne d'alimentation (10), puis par la sous-station (20B) commandée en mode de récupération de courant, puis par le rail (22) pour revenir à la sous-station (20A) commandée en mode de fourniture de courant.

8. Procédé de détection de défauts selon l'une quelconque des revendications 1 à 7, comprenant une étape de vérification de la circulation d'un véhicule ferroviaire entre la première et la deuxième sous-stations (20A, 20B), la différence de tension (D) étant établie si aucun véhicule ne circule entre la première et la deuxième sous-stations (20A, 20B).

9. Procédé de détection de défauts selon l'une quelconque des revendications 1 à 8, la ligne d'alimentation (10) s'étendant entre plus de deux sous-stations (20), le procédé comprenant une étape de choix de deux sous-stations (20A , 20B) à commander respectivement en mode de fourniture de courant et en mode de récupération de courant et une étape d'établissement d'une différence de tension (D) entre les bornes de sortie desdites sous-stations (20A, 20B) en fonction de la partie (T) de la ligne (10) à tester.

10. Procédé de détection de défauts, selon l'une des revendications 1 à 9, comprenant en outre une étape d'émission d'une alarme si le rapport :

$$\frac{Z_{det}}{Z_L}$$

est inférieur à une valeur seuil ($C_s$).

**Patentansprüche**

1. Verfahren zum Detektieren von Fehlern bei einer Stromversorgungsleitung (10) für Schienenfahrzeuge, wobei sich die Leitung (10) zwischen mindestens einer ersten und einer zweiten umschaltbaren Unterstation (20A, 20B) erstreckt, die geeignet sind, einen elektrischen Strom (I) bereitzustellen, der in der Stromversorgungsleitung (10) fließt, wobei die erste Unterstation (20A) in einem Stromversorgungsmodus gesteuert wird, um elektrischen Strom in die Stromversorgungsleitung (10) einzuspeisen, und die zweite Unterstation (20B) in einem Stromrückgewinnungsmodus gesteuert wird, um den elektrischen Strom der Stromversorgungsleitung (10) zurückzugewinnen und ihn an ein elektrisches Verteilernetz (15) zurückzuschicken, wobei das Verfahren **dadurch gekennzeichnet ist, dass** es aufeinanderfolgend aufweist:

einen Schritt des Herstellens eines Spannungsunterschiedes (D) zwischen den Ausgangsanschlüssen der ersten und der zweiten Unterstation (20A, 20B), derart, dass ein Strom (I) in der Stromversorgungsleitung (10) zwischen der ersten Unterstation (20A) und der zweiten Unterstation (20B) fließt,
einen Schritt des Ermittelns des Impedanzwertes ($Z_{det}$) der Versorgungsleitung (10) bei einer Solltemperatur, und
einen Schritt des Vergleichens des ermittelten Impedanzwertes ($Z_{det}$) der Versorgungsleitung (10) bei der Solltemperatur mit einer erwarteten nominalen Impedanz ($Z_L$) der Versorgungsleitung (10) bei der Solltemperatur.

2. Verfahren zum Detektieren von Fehlern gemäß Anspruch 1, **dadurch gekennzeichnet, dass** es einen Schritt des Messens des Stroms ($I_{mes}$) aufweist, der in der Versorgungsleitung (10) fließt, wobei der ermittelte Impedanzwert ($Z_{det}$) der Versorgungsleitung (10) bei der Solltemperatur in Abhängigkeit von dem gemessenen Strom ($I_{mes}$) ermittelt wird.

3. Verfahren zum Detektieren von Fehlern gemäß Anspruch 1 oder 2, **dadurch gekennzeichnet, dass** es einen Schritt des Messens der Temperatur ($T_{mes}$) der Versorgungsleitung (10) aufweist, wobei der ermittelte Impedanzwert ($Z_{det}$) der Versorgungsleitung (10) bei der Solltemperatur in Abhängigkeit von der gemessenen Temperatur ($T_{mes}$) ermittelt wird.

4. Verfahren zum Detektieren von Fehlern gemäß einem der Ansprüche 1 bis 3, **dadurch gekennzeichnet, dass** es einen Schritt des Auswählens und des Steuerns des Spannungsunterschiedes (D) zwischen den Ausgangsanschlüssen der ersten und der zweiten Unterstation (20A, 20B) aufweist.

5. Verfahren zum Detektieren von Fehlern gemäß Anspruch 1 bis 4, **dadurch gekennzeichnet, dass** die erste Unterstation (20A) und die zweite Unterstation (20B) jeweils einen umschaltbaren Leistungswandler (25) aufweisen, so dass die erste Unterstation (20A) und die zweite Unterstation (20B) im Stromversorgungsmodus oder im Stromrückgewinnungsmodus funktionieren können, und so dass das Verfahren einen Schritt des Steuerns des Funktionsmodus der ersten und der zweiten Unterstation (20A, 20B) jeweils im Stromversorgungsmodus und im Stromrückgewinnungsmodus aufweist.

6. Verfahren zum Detektieren von Fehlern gemäß Anspruch 5, **dadurch gekennzeichnet, dass** der umschaltbare Leistungswandler (25) einen Gleichrichter (35) und einen Wechselrichter (40) aufweist, der mit dem Gleichrichter (35) antiparallel verbunden ist, und dass die erste oder die zweite Unterstation (20A, 20B) im Wechselrichtermodus funktioniert, wenn sie im Stromrückgewinnungsmodus gesteuert wird, und im Gleichrichtermodus funktioniert, wenn sie im Stromspeisungsmodus gesteuert wird.

7. Verfahren zum Detektieren von Fehlern gemäß irgendeinem der Ansprüche 1 bis 6, **dadurch gekennzeichnet, dass** jede Unterstation (20A, 20B) mit der Stromversorgungsleitung (10) und mit einer Schiene (22) verbunden ist, so dass der Strom (I) in einer Schleife fließt, wobei er nacheinander durch die Unterstation (20A), die im Stromversorgungsmodus gesteuert wird, dann durch die Versorgungsleitung (10), dann durch die Unterstation (20B), die im Stromrückgewinnungsmodus gesteuert wird, dann durch die Schiene (22) fließt, um zu der Unterstation (20A) zurückzukehren, die im Stromversorgungsmodus gesteuert wird.

8. Verfahren zum Detektieren von Fehlern gemäß irgendeinem der Ansprüche 1 bis 7, aufweisend einen Schritt des Verifizierens des Zirkulierens eines Schienenfahrzeugs zwischen der ersten und der zweiten Unterstation (20A, 20B), wobei der Spannungsunterschied (D) hergestellt wird, wenn kein Fahrzeug zwischen der ersten und der zweiten Unterstation (20A, 20B) zirkuliert.

9. Verfahren zum Detektieren von Fehlern gemäß irgendeinem der Ansprüche 1 bis 8, wobei sich die Versorgungsleitung (10) zwischen mehr als zwei Unterstationen (20) erstreckt, wobei das Verfahren aufweist: einen Schritt des Auswählens von zwei Unterstationen (20A, 20B) zum jeweiligen Steuern im Stromversorgungsmodus und im Stromrückgewinnungsmodus, und einen Schritt des Herstellens eines Spannungsunterschiedes (D) zwischen den Ausgangsanschlüssen der Unterstationen (20A, 20B) in Abhängigkeit von dem zu testenden Abschnitt (T) der Leitung (10).

10. Verfahren zum Detektieren von Fehlern gemäß einem der Ansprüche 1 bis 9, ferner aufweisend einen Schritt des Ausgebens eines Alarmsignals, wenn das Verhältnis:

$$\frac{Z_{det}}{Z_{L}}$$

kleiner als ein Schwellenwert ($C_s$) ist.

**Claims**

1.  A method for detecting faults on a power supply line (10) for railway vehicles, said line (10) extending between at least a first and a second reversible substation (20A, 20B) able to supply an electrical current (I) circulating on the electrical power supply line (10), the first substation (20A) being controlled in a current supply mode, to supply electrical current to the electrical power supply line (10), and the second substation (20B) being controlled in a current recovery mode, to recover the electrical current from the power supply line (10) and return it on an electrical power distribution network (15), said method being **characterized in that** it successively comprises:

    a step of establishing a voltage difference (D) between the output terminals of the first and second substations (20A, 20B) such that a current (I) circulates on the electrical power supply line (10) between the first substation (20A) and the second substation (20B);
    a step of determining the impedance value ($Z_{det}$) of the power supply line (10) at a nominal temperature; and
    a step of comparing the value ($Z_{det}$) of the determined impedance of the power supply line (10) at the nominal temperature with an expected nominal impedance ($Z_L$) of the power supply line (10) at the nominal temperature.

2.  The method for detecting faults according to claim 1, **characterized in that** it comprises a step of measuring the current ($I_{mes}$) circulating on the power supply line (10), the determined value of the impedance ($Z_{det}$) of the power supply line (10) at the nominal temperature being determined as a function of the measured current ($I_{mes}$).

3.  The method for detecting faults according to claim 1 or 2, **characterized in that** it comprises a step of measuring the temperature ($T_{mes}$) of the power supply line (10), the determined value of the impedance ($Z_{det}$) of the power supply line (10) at the nominal temperature being determined as a function of the measured temperature ($T_{mes}$).

4.  The method for detecting faults according to one of claims 1 to 3, **characterized in that** it comprises a step of choosing and controlling the voltage difference (D) between the output terminals of the first and second substations (20A, 20B).

5.  The method for detecting faults according to one of claims 1 to 4, **characterized in that** the first substation (20A) and the second substation each (20B) comprise a reversible power converter (25), such that the first substation (20A) and the second substation (20B) can operate in current supply mode or current recovery mode and **in that** the method comprises a step of controlling the operating mode of the first and second substation (20A, 20B), in current supply mode and in current recovery mode, respectively.

6.  The method for detecting faults according to claim 5, **characterized in that** the reversible power converter (25) comprises a rectifier (35) and an inverter (40), connected to the rectifier (35) in anti-parallel, and **in that** the first or second substation (20A, 20B) operates in inverter mode when it is controlled in current recovery mode and in rectifier mode when it is controlled in current supply mode.

7.  The method for detecting faults according to any one of claims 1 to 6, **characterized in that** each substation (20A, 20B) is connected to the power supply line (10) and to a rail (22) such that the current (I) circulates in a loop passing successively through the substation (20A) controlled in current supply mode, then through the power supply line (10), then through the substation (20B) controlled in current recovery mode, then through the rail (22) to return to the substation (20A) controlled in current supply mode.

8.  The method for detecting faults according to any one of claims 1 to 7, comprising a step of checking if a railway vehicle circulates between the first and second substations (20A, 20B), the voltage difference (D) being established if no vehicle is circulating between the first and second substations (20A, 20B).

9.  The method for detecting faults according to any one of claims 1 to 8, the power supply line (10) extending between more than two substations (20), the method comprising a step of choosing two substations (20A, 20B) to be controlled in current supply mode and current recovery mode, respectively, and a step of establishing a voltage difference (D) between the output terminals of said substations (20A, 20B) depending on the portion (T) of the line (10) to be tested.

10. The method for detecting faults according to one of claims 1 to 9, further comprising a step of emitting an alarm if the ratio:

$$\frac{Z_{\text{det}}}{Z_L}$$

is below a threshold value ($C_s$).

$$\frac{Z_{\text{det}}}{Z_L}$$

FIG.1

## FIG.2

## RÉFÉRENCES CITÉES DANS LA DESCRIPTION

**Documents brevets cités dans la description**

- DE 10337937 A
- EP 1985490 A